# FASCICULE DE BREVET EUROPEEN

(11) **EP 2 953 909 B1**
(45) Date de publication et mention de la délivrance du brevet: **04.07.2018**
(21) Numéro de dépôt: 14709727.3
(22) Date de dépôt: 10.02.2014
(51) Int. Cl.: C03C 3/093, C03C 8/04, C03C 17/04

(54) **ARTICLE VITROCERAMIQUE ET EMAIL ADAPTE POUR SON REVETEMENT**
GLASKERAMISCHER ARTIKEL UND GLASUR ZUR BESCHICHTUNG DAVON
GLASS-CERAMIC ITEM AND ENAMEL SUITABLE FOR COATING SAME

(30) Priorité: 11.02.2013 FR 1351116
(43) Date de publication de la demande: 16.12.2015
(73) Titulaire: Eurokera S.N.C., 02400 Château-Thierry (FR)
(72) Inventeur: LECOMTE, Emmanuel, F-02400 Nesles La Montagne (FR); ROUILLON, Marie-Hélène, F-02400 Chateau-Thierry (FR); FAILLAT, Caroline, F-02400 Belleau (FR); VILATO, Pablo, F-75014 Paris (FR); BARET, Bertrand, F-95360 Montmagny (FR)
(74) Mandataire: Saint-Gobain Recherche
(86) Numéro de dépôt international: PCT/FR2014/050242
(87) Numéro de publication internationale: WO 2014/122409

(56) Documents cités:
- FR-A1- 2 732 960
- FR-A1- 2 826 955
- FR-A1- 2 926 544

## Description

La présente invention concerne un article (substrat, produit) en vitrocéramique, en particulier une plaque vitrocéramique, destiné(e) par exemple à couvrir ou recevoir des éléments de chauffage, comme par exemple une plaque de cuisson, ou une porte de four, ou un insert de cheminée, ou un pare-feu, etc, un procédé d'obtention dudit article, et une nouvelle composition d'émail adaptée pour son revêtement.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité et/ou puisse lire le cas échéant les afficheurs ; elle doit également présenter une transmission élevée dans les longueurs d'onde du domaine de l'infrarouge dans le cas notamment des plaques à foyers radiants.

Les plaques vitrocéramiques doivent également présenter une résistance mécanique suffisante telle qu'exigée dans leur domaine d'utilisation (par exemple selon la norme EN 60335-2-6 pour les plaques de cuisson dans le domaine de l'électroménager). En particulier pour pouvoir être utilisées comme plaques de cuisson, les plaques vitrocéramiques doivent présenter une résistance suffisante à la pression et aux chocs pouvant survenir (support et chute d'ustensiles, etc.). Généralement, les plaques vitrocéramiques seules ont une résistance mécanique se traduisant notamment par un facteur d'échelle (défini ultérieurement) compris entre 150 et 180 MPa.

Les principales plaques actuelles sont de couleur sombre, en particulier noires, mais il existe également des plaques d'aspect plus clair (en particulier blanches, présentant par exemple un flou d'au moins 50% comme décrit dans le brevet FR2766816), voire des plaques transparentes munies de revêtements opacifiants. Parmi les revêtements (fonctionnels et/ou décoratifs) connus pour les plaques vitrocéramiques, on trouve traditionnellement les émaux, à base de fritte de verre et de pigments, et certaines peintures résistant à haute température, à base par exemple de résines alkydes. Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à des hautes températures (permettant l'usage de différents moyens de chauffage pour la plaque) ; cependant ils présentent l'inconvénient de n'autoriser généralement qu'un dépôt unique (pas de superposition d'émail possible) à faible épaisseur sous peine notamment de s'écailler et d'endommager mécaniquement la plaque vitrocéramique. La peinture, quant à elle, peut s'appliquer en plusieurs couches si besoin est ; cependant, elle doit être appliquée après céramisation, et donc nécessite une cuisson supplémentaire, et reste limitée aux plaques pour foyers à induction (fonctionnant à plus basse température).

Des plaques vitrocéramiques ont également été proposées avec des revêtements à base de couches réfléchissantes déposées par pulvérisation cathodique magnétron, ou à base de mélanges vitrifiables incorporant des pigments à effets (paillettes d'oxyde d'aluminium ou de mica revêtues par des oxydes métalliques) ; cependant, les revêtements à base de couches déposées par magnétron sont plus onéreux car ils nécessitent une installation spécifique, sont généralement limités aux plaques pour foyers à induction, et leur fabrication, effectuée en reprise après céramisation, est plus complexe ou délicate ; quant aux revêtements à base de mélange vitrifiable avec pigments à effets, ils présentent les mêmes inconvénients que les émaux déjà évoqués.

Plus récemment, on a cherché à mettre au point de nouveaux émaux permettant de minimiser l'impact de l'émail sur la résistance mécanique de l'ensemble émail cuit/vitrocéramique, par exemple des compositions adaptées aux plaques vitrocéramiques sombres les plus répandues dites 'affinées à l'arsenic' (c'est-à-dire obtenues à partir d'un verre mère comprenant de l'oxyde d'arsenic à des taux par exemple de l'ordre de 0.5 % à 1.5% en poids), les compositions développées étant en particulier à base d'une fritte de verre formée de SiO₂ (présent par exemple à 60.5% en poids de la fritte), de MgO (présent par exemple à 4% en poids), de Na₂O (présent par exemple à 9.5% en poids), de Li₂O (par exemple à 5% en poids), de BaO (par exemple à 10% en poids), de ZrO₂ (par exemple à 2% en poids), de ZnO (par exemple à 4% en poids) et de B₂O₃ (par exemple à 5% en poids). Cependant, ces compositions ne conviennent pas à toutes les applications, ces compositions étant par exemple utilisées essentiellement en face inférieure des plaques de cuisson du fait de leur faible résistance à l'arrachement. De plus, les nouvelles formulations de substrats vitrocéramiques, développées pour permettre un affinage sans arsenic (avec notamment un taux d'oxyde d'arsenic nul ou inférieur à 0.1%, l'arsenic pouvant poser des problèmes en terme d'hygiène et de sécurité), ont entrainé une modification de l'interaction avec l'émail cuit, fragilisant beaucoup plus l'ensemble émail cuit/vitrocéramique, et nécessitant la mise au point d'autres solutions/formulations plus adaptées. Par exemple, FR 2926544 et FR2826955 décrivent des compositions d'émail pour article vitrocéramique. Le but de la présente invention a été de fournir de nouveaux articles vitrocéramiques (tels que des plaques) améliorés, en particulier de mettre au point un émail plus adapté pour le revêtement de différentes vitrocéramiques, cet émail fragilisant le moins possible la vitrocéramique, en particulier pour les nouveaux substrats vitrocéramiques affinés sans arsenic, tout en présentant une résistance à l'arrachement améliorée.

La présente invention concerne ainsi un nouvel article (ou substrat), tel qu'une plaque, vitrocéramique et un nouvel émail pour vitrocéramiques, ledit article étant au moins en partie revêtu d'au moins une couche dudit émail, cet émail comprenant une (ou étant formé d'une ou à partir d'une) fritte de verre de composition (pondérale) suivante, les proportions étant exprimées en pourcentages pondéraux (composition exprimée en pourcentages pondéraux d'oxydes ou encore pourcentages en poids, sur la base des oxydes, les constituants étant communément sous cette forme dans les compositions d'émail) :

| | |
|---|---|
| SiO₂ | 50 - 66% et de préférence 50 < SiO₂ ≤ 65% |
| MgO | 3 - 8% et de préférence 3 - 6% |
| Na₂O | 7 - 15% |
| K₂O | ≤ 3% |
| Li₂O | ≤ 3%, notamment ≤ 2% |
| CaO | ≤ 1% |
| BaO | > 0 - 15% et de préférence 5 - 15% |
| Al₂O₃ | > 3 - 20% et de préférence 3 < Al₂O₃ <20% |
| ZrO₂ | 0 - 4%, de préférence 0 < ZrO₂<4%, notamment 0.5 - 2%. |
| ZnO | > 0 - 5% |
| B₂O₃ | > 0 - 6 % et de préférence 0 < B₂O₃ ≤ 5% |

la somme des oxydes alcalinoterreux CaO + BaO étant en outre comprise entre 8 et 15 %, et de préférence entre 8 et 12 %, et la somme des oxydes alcalins Na₂O + K₂O + Li₂O étant en outre comprise entre 7 et 20%, notamment entre 7 et 15 %.

De préférence, l'article en vitrocéramique selon l'invention est une plaque vitrocéramique, destinée par exemple à couvrir ou recevoir au moins un élément de chauffage, en particulier destinée à servir de plaque de cuisson ou de paroi (en particulier porte ou partie de porte) de four ou d'insert de cheminée ou encore de pare-feu.

La présente invention concerne à la fois le verre (minéral) de composition ci-avant définie, utilisé pour la fritte et permettant l'élaboration de l'émail et de l'article améliorés selon l'invention, l'émail ainsi élaboré, de composition renfermant (initialement) les particules (ou fritte) dudit verre, ainsi que sous sa forme obtenue par cuisson de la dite composition, et l'article en vitrocéramique revêtu (le plus souvent sur une partie ou la totalité d'une face) dudit émail.

La présente invention concerne également un procédé de fabrication d'un article, en particulier d'une plaque selon l'invention, dans lequel on applique, par exemple par sérigraphie ou jet d'émail, la composition précédente sur l'article de verre précurseur (ou verre-mère ou green glass) avant céramisation, ladite composition étant cuite pendant le cycle de céramisation et/ou dans lequel on applique, par exemple par sérigraphie ou jet d'émail, la composition précédente sur l'article vitrocéramique après céramisation, puis on cuit ladite composition.

Avantageusement, l'article, en particulier la plaque, vitrocéramique revêtue de l'émail selon l'invention présente une résistance à la rupture au moins de même ordre que celle des plaques émaillées traditionnelles dans le cas des vitrocéramiques traditionnelles affinées à l'arsenic (c'est-à-dire de (verre mère de) composition comprenant de l'ordre de 0.5 % à 1.5% en poids d'oxyde d'arsenic, ou même de composition comprenant de 0.2 % à 1.5% en poids d'oxyde d'arsenic), et une résistance à la rupture significativement améliorée par rapport à celle des plaques émaillées dans le cas des vitrocéramiques affinées sans arsenic (c'est-à-dire de (verre mère de) composition comprenant moins de 0.2% en poids, de préférence moins de 0.1% en poids, notamment un taux inférieur ou égal à 0.05% en poids, d'oxyde d'arsenic). La résistance à la rupture est mesurée à l'aide d'un test de flexion anneau sur tripode, sur un échantillon de plaque émaillée de dimensions de l'ordre de 70 mm X 70 mm (l'épaisseur de la plaque étant généralement en outre de l'ordre de 4 mm), la face émaillée étant mise en extension. L'échantillon repose sur 3 billes de 9.5 mm de diamètre chacune positionnées au sommet d'un triangle équilatéral inscrit dans un cercle de 40 mm de diamètre. Une force est appliquée en appuyant au centre (la contrainte étant isotrope sous cette zone) de l'échantillon avec un anneau de 10 mm de diamètre. La vitesse d'avancée de l'anneau est de l'ordre de 5 mm/min. Les résultats sont interprétés à l'aide du modèle de Weibull décrit dans l'article suivant : « A statistical distribution of strength of Materials », Royal Swedish Institute For Engineering Research, W. Weibull, Stockholm 1939, 1-45. La donnée obtenue révélatrice de la contrainte moyenne à rupture est la donnée appelée « facteur d'échelle », exprimé en MPa (ce facteur d'échelle étant en d'autres termes le résultat du dépouillement par la méthode Weibull des mesures de module de rupture en flexion (MOR)).

Ainsi, l'article, en particulier la plaque, vitrocéramique revêtu de l'émail selon l'invention présente avantageusement (notamment pour la zone traitée) un facteur d'échelle, obtenu selon le modèle de Weibull après test en flexion, d'au moins 80 MPa, ledit facteur pouvant aller jusqu'à 130 MPa au moins, dans le cas où la vitrocéramique utilisée est affinée sans arsenic, le facteur d'échelle obtenu pour une même vitrocéramique revêtue cette fois d'un émail traditionnel étant généralement bien inférieur (en particulier n'excédant pas 60 MPa). On observe ainsi que les vitrocéramiques obtenues dans la présente invention sont bien moins fragilisées par rapport à celles traitées par des émaux traditionnels.

En outre, l'article vitrocéramique revêtu de l'émail selon l'invention présente avantageusement une résistance à l'arrachement améliorée, en particulier par rapport aux articles vitrocéramiques revêtus des émaux à effet renforçant récemment développés, que la vitrocéramique utilisée soit affinée à l'arsenic ou non. La résistance à l'arrachement est généralement mesurée en procédant comme suit : l'émail est déposé par sérigraphie sous forme de motifs aléatoires de taille millimétrique sur une plaque de verre précurseur puis cuit pendant la céramisation ou (est déposé) sur une plaque vitrocéramique puis cuit en reprise (après la céramisation). Lorsque l'émail est cuit en reprise, la cuisson est opérée à une température permettant de développer des cristaux dans l'émail, cette température étant choisie dans la gamme de températures dans laquelle on observe notamment un bon nappage et la formation des cristaux, cette gamme de températures se situant généralement entre 700 et 900°C pour les émaux selon l'invention. Généralement et de préférence, cette température est supérieure d'environ 250 à 300°C par rapport à la température de ramollissement dilatométrique de l'émail (ou plus précisément du verre/de la fritte de verre formant l'émail), et de préférence correspond au (ou se situe juste au ou à l'intérieur du) pic exothermique de cristallisation de l'émail.

Après cuisson, deux bandes de ruban adhésif (de type « Scotch ») de 12 mm de large (et dont la longueur dépend de la taille des motifs, cette longueur pouvant aller notamment jusqu'à 30 cm) tel que celui commercialisé sous la référence Transparent Tape 550 par la société 3 M sont ensuite appliquées l'une sur l'autre sur l'émail et retirées ensemble d'un coup sec perpendiculairement à la surface. La vitrocéramique est ensuite observée sous microscope à un grossissement de 100 fois, la note 0 étant attribuée lorsqu'il n'y a pas d'arrachement, la note 1 quand il y a moins d'un arrachement par motif millimétrique, cet arrachement étant de petite taille (moins de 25% de la taille du motif) par rapport à la taille du motif, la note 2 quand il y a de 1 à 3 arrachements par motif, ces arrachements étant de petite taille (l'ensemble de ces arrachements représentant moins de 25% de la taille du motif) par rapport à la taille du motif, la note 3 quand il y a de 3 à 5 arrachements par motif (l'ensemble de ces arrachements représentant moins de 25% de la taille du motif) par rapport à la taille du motif, la note 4 quand il y a en moyenne 25 % à 50% du motif arraché, et la note 5 quand il y a en moyenne plus de 50% du motif arraché. L'article vitrocéramique revêtu de l'émail selon l'invention présente avantageusement une note de résistance à l'arrachement de 0, correspondant à aucun arrachement. L'émail selon l'invention peut ainsi être avantageusement utilisé en face supérieure des vitrocéramiques.

La composition de l'émail selon l'invention défini plus avant va maintenant être plus précisément explicitée ci-après. Dans cette composition, les domaines définis pour chacun des composants sont prépondérants pour l'obtention des propriétés recherchées, le respect de ces domaines permettant notamment de garantir à la fois l'élaboration de la fritte à haute température, un bon nappage de l'émail sur le substrat, la tenue mécanique recherchée et la durabilité chimique, etc.

Comme indiqué plus avant, la composition mentionnée comprend plus de 3 % d'alumine Al₂O₃. De façon particulièrement préférée, elle comprend plus de 4% d'alumine (4< Al₂O₃ <20%), en particulier plus de 5% d'alumine (5 < Al₂O₃ <20%), voire au moins 7% d'alumine (7 ≤ Al₂O₃ <20%) dans des modes de réalisation avantageux selon l'invention. De préférence également, elle comprend plus de 7% d'oxyde alcalin Na₂O (7< Na₂O ≤15%), en particulier au moins 8% de Na₂O (8 ≤ Na₂O ≤15%). De préférence également, elle comprend moins de 13% d'oxyde alcalinoterreux BaO (0<BaO<13%, notamment 5<BaO<13%), en particulier elle comprend au plus 12% de BaO (0<BaO≤12%, notamment 5<BaO≤12%). De préférence également, elle comprend un faible taux de Li₂O, en particulier de l'ordre de 2% ou inférieur, ou est dénuée de Li₂O.

A noter que, outre les constituants évoqués ci-dessus, la composition peut le cas échéant renfermer d'autres constituants (par exemple sous forme de traces liées au degré de pureté des matières premières) en quantité limitée (inférieure à 5%, généralement inférieure à 2%, en particulier inférieure à 1%) dans la mesure où ces constituants ne compromettent pas les propriétés recherchées, la composition étant en outre avantageusement exempte de métaux toxiques tels que le plomb, le mercure, le cadmium et le chrome hexavalent.

On note de façon surprenante que l'émail selon l'invention, à base de la fritte de verre précédemment mentionnée, présente un coefficient de dilatation (ce coefficient étant mesuré plus précisément sur la fritte de verre de l'émail, considérée comme un verre) d'au moins 60.10⁻⁷ K⁻¹, en particulier d'au moins 75.10⁻⁷, voire d'au moins 80.10⁻⁷ K⁻¹, c'est-à-dire bien plus élevé que celui du substrat vitrocéramique. Or jusqu'à présent, il était d'usage de chercher des émaux de coefficients de dilatation très faibles proches de celui du substrat vitrocéramique, la tenue de l'émail sur le substrat étant supposée d'autant moins bonne que la différence entre les coefficients de dilatation était élevée.

L'émail sélectionné selon l'invention et l'article, en particulier la plaque, revêtu de cet émail présentent une bonne tenue thermique compatible avec l'utilisation de divers types de chauffages (par induction, radiant, halogène, gaz...), résiste à la rayure, à l'abrasion et aux chocs thermiques, présente une bonne résistance au vieillissement, offre le cas échéant (notamment lorsque la fritte est combinée avec des pigments et/ou combinée avec une autre couche telle qu'une couche de peinture comme explicité ultérieurement) un excellent compromis entre l'opacité communément recherchée pour les émaux et la résistance aux différentes contraintes mécaniques auxquelles les plaques revêtues sont soumises, l'émail affectant moins la résistance mécanique des vitrocéramiques affinées sans arsenic sur lesquelles l'émail est déposé que les émaux traditionnels, comme recherché selon l'invention, tout en présentant une bonne résistance à l'arrachement, comme illustré ultérieurement.

Du point de vue du procédé, la composition déposée ne diffère pas d'un émail classique et est totalement compatible avec les lignes de production existantes, en particulier elle peut être appliquée par sérigraphie en utilisant les toiles et machines de sérigraphie habituelles. Par rapport aux couches minces déposées par magnétron, elle est plus économique et, étant isolante électriquement, elle peut être utilisée sans ajustement particulier avec les touches sensitives les plus fréquentes à principe capacitif. Elle est également compatible avec tous types de chauffage (en particulier, elle supporte les températures élevées - jusqu'à 700°C - des éléments chauffants radiants et convient aux champs magnétiques des bobines d'induction, etc), contrairement aux peintures et le cas échéant aux couches par magnétron, généralement réservées à certains types de chauffage. Elle peut également être déposée dans toute zone de la plaque (y compris zones de chauffe) contrairement notamment aux peintures.

Outre la fritte de verre (ou particules de verre) de composition précédemment explicitée, l'émail selon l'invention peut également comprendre d'autres composants. Rappelons que les émaux sont généralement formés (avant application sur le substrat et cuisson) d'une poudre comprenant une fritte de verre (devant former la matrice vitreuse) et des pigments (en tant que colorants notamment, ces pigments pouvant également faire partie de la fritte), la fritte et les pigments étant à base d'oxydes métalliques, et d'un médium ou « véhicule » permettant l'application et l'adhésion préalable de l'émail sur un substrat.

L'émail selon l'invention peut ainsi comprendre des pigments, le taux de pigment(s), ajoutés à la fritte, dans l'ensemble fritte(s)/pigment(s) de l'émail étant généralement compris entre 5 % et 40 % en poids (par rapport à l'ensemble fritte(s)/pigment(s)), et de préférence allant de 10 % à 35% en poids. Les pigments pour émaux peuvent être choisis parmi les composés contenant des oxydes métalliques tels que des oxydes de chrome, des oxydes de cuivre, des oxydes de fer, des oxydes de cobalt, des oxydes de nickel, des oxydes de zinc, des oxydes de manganèse, des oxydes de cérium, des oxydes de titane, voire à base d'alumine, etc. ou peuvent être choisis parmi les chromates de cuivre, les chromates de cobalt, etc. Ils sont utilisés en fonction de la coloration et/ou le cas échéant de l'opacité que l'on souhaite obtenir. Un exemple de pigments particulièrement approprié à ajouter à la fritte selon l'invention est en particulier un mélange d'oxydes de fer, chrome, cuivre, cobalt et nickel, ou un pigment blanc à base d'oxyde de titane.

La fritte de verre et les pigments se présentent traditionnellement sous forme de poudre avant d'être mis en suspension dans un médium. La granulométrie de l'ensemble fritte(s)/pigment(s) sous forme de poudre est généralement choisie de façon à ce qu'au moins 90 % en poids des particules formant la poudre présentent un diamètre inférieur à 20 µm, avantageusement inférieur à 15 µm, en particulier inférieur à 10 µm, notamment inférieur à 5 µm (c'est-à-dire de façon à ce que (les particules de) l'ensemble fritte(s)/pigment(s) présente(nt) un D90 inférieur à 20 µm, avantageusement inférieur à 15 µm, en particulier inférieur à 10 µm, notamment inférieur à 5 µm).

La fritte de la composition selon l'invention est classiquement obtenue par fusion à haute température (plus de 1000°C) d'un mélange de matières premières (naturelles ou synthétiques) appropriées. La fritte est ensuite broyée (généralement dans un solvant, tel que l'éthanol, que l'on évapore par la suite) sous forme de poudre, et additionnée le cas échéant de pigments et/ou opacifiants (avant et/ou après broyage(s)). Le mélange pulvérulent (poudre de verre + pigments (et/ou opacifiants)) obtenu (et présentant, après broyage(s) et/ou autre(s) traitement(s) approprié(s), des particules présentant un diamètre moyen D90 inférieur à 20 µm, avantageusement inférieur à 15 µm, en particulier inférieur à 10 µm, notamment inférieur à 5 µm) est, après évaporation le cas échéant du solvant de broyage, par la suite mis en suspension dans un médium afin d'obtenir une composition (pâte) apte à être déposée sur un substrat.

La composition d'émail selon l'invention, sous sa forme prête au dépôt, comprend ainsi également généralement un médium permettant la mise à viscosité désirée pour l'application sur le substrat et permettant la liaison avec le substrat. Ce médium, choisi afin d'assurer une bonne mise en suspension des particules des frittes et pigments et devant se consumer au plus tard lors de la cuisson de l'émail, peut être tout médium ou liant organique habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc. La proportion de médium dans la composition prête à être déposée est de préférence comprise entre 40 % et 60 % en poids de ladite composition, de préférence entre 45% et 55 % en poids.

La composition d'émail avant dépôt sur un article, tel qu'une plaque, se présente donc généralement sous forme d'un mélange liquide-solide stable, de consistance pâteuse, de viscosité adaptée au procédé de dépôt (en particulier par sérigraphie).

La couche d'émail déposée sur l'article ou substrat, en particulier la plaque, selon l'invention couvre généralement au moins une partie d'une face de l'article (en particulier de la plaque), et peut couvrir la totalité de ladite face (à l'exception le cas échéant de zones et/ou d'épargnes, destinées par exemple à la lecture d'afficheurs). L'épaisseur d'une couche d'émail après cuisson (que la cuisson soit opérée pendant la céramisation après dépôt sur verre précurseur, ou soit opérée en reprise après dépôt sur la vitrocéramique, comme explicité ultérieurement) est de 1 à 10 µm, généralement de 2 à 3.5 µm, en particulier de 2 à 3 µm, l'épaisseur de la vitrocéramique étant par exemple de l'ordre de 3 - 4 mm dans le cas d'une plaque. Dans ce dernier cas également, la couche définie selon l'invention peut être déposée en face inférieure ou supérieure de la plaque et est de préférence déposée en face supérieure.

L'émail selon l'invention peut être déposé en une ou éventuellement plusieurs couches et/ou être combiné le cas échéant avec d'autres couches et/ou servir de sous couche à une autre couche, telle qu'une couche d'émail (notamment d'une autre nature) ou de peinture, permettant notamment selon les cas d'augmenter les épaisseurs et/ou de juxtaposer deux types de décors (l'une des couches formant par exemple une trame de fond et l'autre formant un décor ou graphisme spécifique) et/ou de procurer une opacité plus importante, etc.

L'émail peut par exemple être utilisé le cas échéant avec au moins une couche de peinture opacifiante. La ou les couches de peinture combinées le cas échéant à l'émail selon l'invention sont avantageusement choisies de façon à résister à de hautes températures et à présenter une stabilité au niveau de leur couleur et de leur cohésion avec la plaque, et de façon à ne pas affecter les propriétés mécaniques de la plaque. Elles présentent avantageusement une température de dégradation supérieure à 350°C, sont généralement à base de résine(s) (telle(s) qu'une résine silicone, en particulier modifiée par l'incorporation d'au moins une résine alkyde, résine polyimide, polyamide, polyfluorée et/ou polysiloxane, comme les résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH, etc), et sont le cas échéant chargées (par exemple en pigment(s) ou colorant(s)), et éventuellement diluées pour ajuster leur viscosité, le diluant étant le cas échéant éliminé lors de leur cuisson ultérieure. L'épaisseur de chaque couche de peinture peut être comprise entre 1 et 100 microns (notamment entre 5 et 50 microns) et son application peut s'effectuer par toute technique adaptée, telle que dépôt à la brosse, à la raclette, par pulvérisation, dépôt électrostatique, trempage, dépôt au rideau, dépôt par sérigraphie, etc. Généralement selon l'invention, il se fait par sérigraphie, suivie le cas échéant par un séchage.

Avantageusement, le substrat, en particulier la plaque vitrocéramique, revêtu de l'émail (obtenu après cuisson) selon l'invention (l'émail au besoin comprenant des pigments et/ou étant associé à une couche de peinture, par exemple) présente une opacité telle qu'elle permet notamment le masquage d'éléments sous-jacents. L'opacité est évaluée le cas échéant en mesurant (colorimétrie en réflexion effectuée à l'aide d'un colorimètre Byk-Gardner Color Guide 45/0) la variation de couleur ΔE*, correspondant à la différence entre la couleur, mesurée sur la face du substrat opposée à la face portant l'émail, pour le substrat posé sur fond blanc opaque et celle pour le substrat posé sur fond noir opaque (ΔE* = ((L_{B}*-L_{N}*)² + (a_{B}*-a_{N}*)² + (b_{B}*-b_{N}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir). Avantageusement, le substrat vitrocéramique revêtu de l'émail selon l'invention présente une valeur de ΔE* inférieure ou égale à 0.5, de préférence inférieure ou égale à 0.4.

Comme déjà évoqué, la présente invention concerne également le procédé de fabrication des articles, en particulier des plaques, selon l'invention, dans lequel on applique, de préférence par sérigraphie, la composition d'émail selon l'invention sur l'article de verre précurseur (ou verre-mère ou green glass) avant céramisation, ladite composition étant cuite pendant le cycle de céramisation et/ou dans lesquels on applique, de préférence par sérigraphie, ladite composition sur l'article vitrocéramique après céramisation, puis on cuit ladite composition.

Lorsque la cuisson de l'émail est effectuée en reprise (après céramisation, ce mode opératoire étant également appelé procédé avec recuisson), ladite cuisson peut notamment être avantageusement opérée à une température permettant de développer des cristaux dans l'émail (tout en modifiant le cas échéant l'interface, cette température étant par exemple choisie dans la gamme de températures entre lesquelles on observe un bon nappage de l'émail et la formation des cristaux, cette gamme de températures se situant notamment entre 700 et 900°C pour les émaux selon l'invention, cette température étant le cas échéant supérieure d'environ 250°C à 300°C par rapport à la température de ramollissement dilatométrique de l'émail (ou plus précisément du verre/de la fritte de verre formant l'émail), et de préférence correspondant au (ou se situant juste au ou à l'intérieur du) pic exothermique de cristallisation de l'émail. L'émail recouvrant le substrat selon l'invention est ainsi le cas échéant cristallisé après cuisson.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

Dans le procédé selon l'invention, la composition précédemment décrite est déposée, soit sur l'article de verre précurseur soit sur l'article en vitrocéramique obtenu après céramisation, généralement sous forme d'une pâte, le dépôt de la couche de composition étant préférentiellement effectué par sérigraphie (le dépôt pouvant néanmoins être effectué par une autre méthode au besoin), l'épaisseur de la couche déposée (ou film humide) étant par exemple de l'ordre de quelques microns (en particulier inférieure ou égale à 20 µm, et généralement inférieure ou égale à 10 µm). Après dépôt de la composition, l'article revêtu est généralement séché (par exemple par infra-rouge ou en étuve), généralement à des températures de l'ordre de 100-150°C, de façon à évaporer le solvant (médium), fixer le revêtement et permettre la manipulation de l'article, résultant en un revêtement séché, puis selon les cas subit un cycle de céramisation traditionnel à haute température (comme évoqué notamment précédemment), la cuisson de la couche accompagnant la transformation du substrat, ou subit une (re)cuisson à une température située préférentiellement dans la zone de cristallisation comme explicité précédemment, le temps de cuisson étant adapté en fonction de la température choisie (par exemple augmenté si la température est choisie plus basse), le revêtement obtenu présentant alors une épaisseur généralement de l'ordre de quelques microns (généralement entre 1 et 10 µm, en particulier de 2 à 3.5 µm). Le procédé avec (re)cuisson est généralement préféré car il permet d'adapter la température de cuisson de façon plus adaptée comme explicité précédemment et il permet d'obtenir de meilleures propriétés mécaniques pour les articles vitrocéramiques selon l'invention.

Dans un mode de réalisation, l'article selon l'invention est à base d'une vitrocéramique d'aspect noir, à transmission lumineuse faible, inférieure à 5% (telle que les plaques commercialisées sous le nom Kerablack par la société Eurokera) revêtue par la couche d'émail selon l'invention, par exemple est à base de vitrocéramiques affinées à l'arsenic de composition telle que décrite dans la demande de brevet EP0437228 ou US5070045 ou FR2657079.

De préférence, l'article selon l'invention est à base d'une vitrocéramique présentant un taux d'oxydes d'arsenic (exprimé en As₂O₃) inférieur à 0.2 %, en particulier inférieur à 0.1%, notamment inférieur ou égal à 500 ppm, voire nul, par exemple est à base de vitrocéramiques de composition telle que décrite dans la demande de brevet WO 2012/156444 (ces vitrocéramiques étant d'aspect noir, à transmission lumineuse faible, notamment inférieure à 5%, de préférence comprise entre 0.8 % et 2%, et étant affinées à l'étain).

L'article selon l'invention peut également être de couleur claire, à base d'une vitrocéramique transparente (telle que les plaques commercialisées sous le nom KeraLite par les sociétés Eurokera et Keraglass) ou translucide (telle que les plaques commercialisées sous le nom Kerawhite, Kerabiscuit ou Keravanilla par la société Eurokera), revêtue par la couche d'émail selon l'invention, ladite couche pouvant être à usage décoratif et/ou fonctionnel (par exemple pouvant être destinée à masquer, au moins en partie, les éléments sous-jacents au repos, tels que éléments de chauffage et afficheurs éventuels, tout en permettant la détection des éléments de chauffage et afficheurs éventuels lorsqu'ils sont en service).

Lorsque l'article selon l'invention est une plaque, ladite plaque peut le cas échéant comprendre des reliefs et/ou creux et/ou elle peut être munie de (ou associée avec des) élément(s) fonctionnel(s) ou de décor supplémentaire(s) (cadre, connecteur(s), câble(s), élément(s) de commande, afficheur(s), par exemple à diodes électroluminescentes dits « à 7 segments » ou à cristaux liquides, bandeau de commande électronique à touches sensitives et affichage digital, etc.). La plaque selon l'invention peut être montée sur un appareil, à l'intérieur duquel sont disposés le ou les éléments de chauffage, le cas échéant sans complexe intermédiaire visant à masquer l'intérieur de l'appareil à la vue de l'utilisateur.

L'invention concerne aussi les appareils (ou dispositifs) de cuisson et/ou de maintien à haute température comportant au moins un substrat (plaque ou porte) selon l'invention (par exemple cuisinières, tables de cuisson encastrables, fours, etc). L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux. En outre, l'invention n'est pas limitée à la fabrication de plaques de cuisson pour cuisinières ou tables de cuisson. Les plaques fabriquées conformément à l'invention peuvent également être, comme précisé précédemment, d'autres plaques (inserts de cheminées, pare-feu, etc) devant présenter une grande insensibilité aux variations de température.

Les exemples qui suivent illustrent les résultats obtenus avec les articles vitrocéramiques et émaux selon la présente invention (exemples 1 à 4) en comparaison avec des exemples de référence portant sur des articles vitrocéramiques et émaux antérieurs différents (exemples de référence 1 à 4).

Dans ces exemples, on fabrique une plaque vitrocéramique dont une face est lisse (celle devant recevoir la couche d'émail sous forme de motifs aléatoires millimétriques), et l'autre présente des picots (de 80 µm de hauteur et de circonférence elliptique de 1.65/1.5 mm) régulièrement répartis, à partir d'un verre ayant une composition telle qu'indiquée dans chaque exemple.

Ce verre est fondu aux alentours de 1600-1750°C, en une quantité telle qu'un ruban de verre puisse être laminé, ruban dans lequel des plaques de verre, de dimensions finales 56,5 cm x 56,5 cm x 0,4 cm, sont découpées.

Les plaques sont revêtues par sérigraphie sur leur face supérieure avec une composition d'émail stable sérigraphiable (à base d'une poudre de composition précisée dans chaque exemple, la poudre étant empâtée dans un médium à base de résine acrylique et d'huile de pin commercialisé sous la référence MX54 par la société Ferro en vue de son dépôt sur la plaque et ledit médium se consumant au plus tard lors de la cuisson de l'émail) à l'aide de toiles habituelles en polyester ou polyamide, puis séchées aux alentours de 100-150°C.

Les plaques (green glass ou verre-mère) revêtues d'émail sont ensuite céramisées sur des plateaux céramiques selon un cycle tel que décrit dans la demande de brevet FR2657079 (pour les vitrocéramiques affinées à l'arsenic) ou dans la demande WO2012156444 (pour les vitrocéramiques non affinées à l'arsenic/vitrocéramiques affinées à l'étain)

On obtient des plaques vitrocéramiques revêtues d'une couche d'émail, l'épaisseur de la couche d'émail après cuisson étant de l'ordre de 2.5 µm. Ces plaques sont découpées pour former des éprouvettes de 70 mm x 70 mm, lesquelles sont testées en terme de résistance mécanique en mesurant leur facteur d'échelle (exprimé en MPa) ainsi que leur module de Weibull au moyen d'un test de flexion anneau sur tripode, les résultats étant interprétés à l'aide du modèle de Weibull, comme décrit précédemment dans le présent texte, la surface décorée étant en extension. La résistance à l'arrachement de l'émail est en outre évaluée comme décrit précédemment dans le présent texte, à l'aide d'un ruban adhésif commercialisé sous la référence transparent tape 550 par la société 3LM.

### Exemple de référence 1 :

Dans ce premier exemple de référence, la plaque vitrocéramique est fabriquée à partir d'un verre ayant une composition selon la demande de brevet FR2657079 (vitrocéramique traditionnelle affinée à l'arsenic), celle-ci comprenant en pourcentages pondéraux les oxydes suivants :

| | |
|---|---|
| SiO₂ | 69,44 |
| Al₂O₃ | 18,9 |
| Li₂O | 3,3 |
| MgO | 0,9 |
| ZnO | 1,55 |
| BaO | 0,75 |
| K₂O | 0,1 |
| TiO₂ | 2,6 |
| ZrO₂ | 1,75 |
| As₂O₃ | 0,51 |
| Na₂O | 0,2 |

L'émail utilisé est un émail traditionnel à base d'une poudre comprenant 90% en poids d'une fritte de verre de composition suivante : SiO₂ : 48.6 % ; MgO : 3.8 % ; Na₂O : 2.6 % ; K₂O : 3.3 % ; Li₂O : 1.3 % ; CaO : 0.6 % ; BaO : 17.8 % ; Al₂O₃ : 7.1 % ; ZrO₂ : 1.7 % ; ZnO : 8 % ; B₂O₃: 5.4 %, et 10% en poids d'un pigment à base d'oxydes de fer, de cuivre et de chrome. Le facteur d'échelle mesuré est de l'ordre de 88 MPa, le module de Weibull (révélateur de la dispersion des résultats, les résultats étant d'autant moins dispersés que le module est grand) étant égal à 13.7. La note de résistance à l'arrachement est de 0. Le coefficient de dilatation de la fritte de verre/de l'émail (entre 20 et 400°C, ce coefficient étant calculé à partir du modèle d'Appen décrit dans l'ouvrage Glass - Nature, structure and properties, H. Scholze, Springer-Verlag, 1991) est de 74.10⁻⁷ K⁻¹.

### Exemple de référence 2 :

Dans le second exemple de référence, on procède comme dans l'exemple de référence 1 en remplaçant l'émail par un émail amélioré ayant un effet renforçant, cet émail étant à base d'une poudre comprenant 100% en poids d'une fritte de verre sans alumine de composition suivante : SiO₂ : 60.5 % ; MgO : 4 % ; Na₂O : 9.5 % ; Li₂O : 5 % ; BaO : 10 % ; ZrO₂ : 2 % ; ZnO : 4 % ; B₂O₃ : 5 % . Le facteur d'échelle obtenu est de l'ordre de 180 MPa (avec un écart-type de 3.2 MPa), le module de Weibull étant égal à 27 MPa. La note de résistance à l'arrachement est de 3. Le coefficient de dilatation de la fritte de verre/de l'émail est de 99.10⁻⁷ K⁻¹.

Par rapport à l'exemple de référence 1, on observe un renforcement de la vitrocéramique affinée à l'arsenic, mais une dégradation de la résistance à l'arrachement.

### Exemple de référence 3 :

Dans ce troisième exemple de référence, on procède comme dans l'exemple de référence 1 en remplaçant la vitrocéramique par une vitrocéramique fabriquée à partir d'un verre non affiné à l'arsenic ayant une composition comprenant en pourcentages pondéraux les oxydes suivants:

| | |
|---|---|
| SiO₂ | 64.8 |
| Al₂O₃ | 20.76 |
| Li₂O | 3.85 |
| MgO | 0.48 |
| ZnO | 1.5 |
| BaO | 2.5 |
| K₂O | 0.2 |
| TiO₂ | 3.0 |
| ZrO₂ | 1.3 |
| CaO | 0.5 |
| As₂O₃ | 0.05 |
| Na₂O | 0.6 |
| SnO₂ | 0.3 |
| V₂O₅ | 0.04 |
| Cr₂O₃ | 0.02 |
| Fe₂O₃ | 0.1 |

Le facteur d'échelle mesuré est de l'ordre de 59 MPa, le module de Weibull étant égal à 21.2. La note de résistance à l'arrachement est de 0. Le coefficient de dilatation de la fritte de verre/de l'émail est de 74.10⁻⁷ K⁻¹.

On observe une forte dégradation de la résistance mécanique de la vitrocéramique non affinée à l'arsenic revêtue de l'émail traditionnel, la résistance à l'arrachement restant satisfaisante.

### Exemple de référence 4 :

Dans ce quatrième exemple de référence, on procède comme dans l'exemple de référence 3 en remplaçant l'émail par un émail formé de 90% de la fritte de l'exemple de référence 2 et de 10% du pigment de l'exemple 1. Le facteur d'échelle mesuré est de l'ordre de 106 MPa, le module de Weibull étant égal à 13.3. La note de résistance à l'arrachement est de 2. Le coefficient de dilatation de la fritte de verre/de l'émail est de 99.10⁻⁷ K⁻¹.

On observe une dégradation de la résistance mécanique de la vitrocéramique non affinée à l'arsenic revêtue de cet émail traditionnel par rapport à celle obtenue avec une vitrocéramique affinée à l'arsenic, la résistance à l'arrachement restant faible.

### Exemple 1 :

Dans ce premier exemple selon l'invention, on procède comme dans l'exemple de référence 3 en remplaçant la fritte de l'émail par une fritte selon l'invention de composition suivante : SiO₂ : 54.5 % ; MgO : 4 % ; Na₂O : 9.5 % ; Li₂O : 2 % ; BaO : 10 % ; ZrO₂ : 1 % ; ZnO : 4 % ; B₂O₃ : 5 % ; Al₂O₃ : 10%. Le facteur d'échelle obtenu est de l'ordre de 85 MPa, le module de Weibull étant égal à 12.3. La note de résistance à l'arrachement est de 0. Le coefficient de dilatation de la fritte de verre/de l'émail est de 84.10⁻⁷ K⁻¹.

On observe que la résistance mécanique de la vitrocéramique non affinée à l'arsenic revêtue de l'émail selon l'invention est au moins maintenue au niveau de celle habituellement obtenue avec les vitrocéramiques traditionnelles affinées à l'arsenic, alors qu'elle chute bien plus fortement lorsque l'on utilise les émaux traditionnels, la résistance à l'arrachement étant en même temps améliorée par rapport à celle obtenue en utilisant des compositions permettant de conserver une bonne résistance mécanique.

### Exemple 2 :

Dans ce second exemple selon l'invention, on procède comme dans l'exemple 1 en remplaçant la fritte de l'émail par une fritte selon l'invention de composition suivante : SiO₂ : 56.5 % ; MgO : 4 % ; Na₂O : 9.5 % ; Li₂O : 2 % ; BaO : 10 % ; ZrO₂ : 2 % ; ZnO : 4 % ; B₂O₃ : 5 % ; Al₂O₃ : 7%. Le facteur d'échelle obtenu est de l'ordre de 85 MPa, le module de Weibull étant égal à 11.5. La note de résistance à l'arrachement est de 0. Le coefficient de dilatation de la fritte de verre/de l'émail est de 85.10⁻⁷ K⁻¹.

On observe là encore que la résistance mécanique de la vitrocéramique non affinée à l'arsenic revêtue de l'émail selon l'invention est au moins maintenue au niveau de celle habituellement obtenue avec les vitrocéramiques traditionnelles affinées à l'arsenic, alors qu'elle chute bien plus fortement lorsque l'on utilise les émaux traditionnels, la résistance à l'arrachement étant en même temps améliorée par rapport à celle obtenue en utilisant des compositions permettant de conserver une bonne résistance mécanique.

### Exemple 3 :

Dans ce troisième exemple selon l'invention, on procède comme dans l'exemple 1 en remplaçant la fritte de l'émail par une fritte selon l'invention de composition suivante : SiO₂ : 57.5 % ; MgO : 4 % ; Na₂O : 9.5 % ; Li₂O : 2 % ; BaO : 10 % ; ZrO₂ : 1 % ; ZnO : 4 % ; B₂O₃ : 5 % ; Al₂O₃ : 7%. Le facteur d'échelle obtenu est de l'ordre de 93 MPa, le module de Weibull étant égal à 15. La note de résistance à l'arrachement est de 0. Le coefficient de dilatation de la fritte de verre/de l'émail est de 85.10⁻⁷ K⁻¹.

On observe là encore que la résistance mécanique de la vitrocéramique non affinée à l'arsenic revêtue de l'émail selon l'invention est au moins maintenue au niveau de celle (voire supérieure à celle, comme dans le cas présent) habituellement obtenue avec les vitrocéramiques traditionnelles affinées à l'arsenic, alors qu'elle chute bien plus fortement lorsque l'on utilise les émaux traditionnels, la résistance à l'arrachement étant en même temps améliorée par rapport à celle obtenue en utilisant des compositions permettant de conserver une bonne résistance mécanique.

### Exemple 4 :

Dans ce quatrième exemple selon l'invention, on procède comme dans l'exemple 2 mais en incluant cette fois une étape de broyage supplémentaire de l'ensemble fritte/pigments de façon à atteindre un diamètre moyen D90 des particules de l'émail de l'ordre de 4.7 µm. Le facteur d'échelle des plaques émaillées obtenu après application et cuisson de l'émail sur la vitrocéramique est de l'ordre de 120 MPa, le module de Weibull étant égal à 9.7. La note de résistance à l'arrachement est de 1. Le coefficient de dilatation de la fritte de verre/de l'émail est de 85.10⁻⁷ K⁻¹.

On observe une amélioration supplémentaire de la résistance mécanique de la vitrocéramique non affinée à l'arsenic obtenue selon le présent exemple par rapport à celle constatée précédemment, la résistance à l'arrachement restant en même temps améliorée par rapport à celle obtenue en utilisant d'autres compositions permettant de conserver une bonne résistance mécanique.

Les plaques selon l'invention peuvent notamment être utilisées avec avantages pour réaliser une nouvelle gamme de plaques de cuisson pour cuisinières ou tables de cuisson, ou pour réaliser des éléments de paroi ou des parois (par exemple des portes) de fours, ou pour réaliser des inserts de cheminée ou des pare-feu, etc.

## Revendications

1. Article vitrocéramique, en particulier plaque vitrocéramique destinée par exemple à couvrir ou recevoir au moins un élément de chauffage, ledit article étant au moins en partie revêtu d'au moins une couche d'un émail formé d'une fritte de verre de composition suivante, les proportions étant exprimées en pourcentages pondéraux :
| | |
|---|---|
| SiO₂ | 50 - 66% et de préférence 50 < SiO₂ ≤ 65% |
| MgO | 3 - 8% et de préférence 3 - 6% |
| Na₂O | 7 - 15% |
| K₂O | ≤ 3% |
| Li₂O | ≤ 3%, notamment ≤ 2% |
| CaO | ≤ 1% |
| BaO | > 0 - 15% et de préférence 5 - 15% |
| Al₂O₃ | > 3 - 20% et de préférence 3 < Al₂O₃ <20% |
| ZrO₂ | 0 - 4%, de préférence 0 < ZrO₂<4%, notamment 0.5 - 2%. |
| ZnO | > 0 - 5% |
| B₂O₃ | > 0 - 6 % et de préférence 0 < B₂O₃ ≤ 5% |
la somme des oxydes alcalinoterreux CaO + BaO étant en outre comprise entre 8 et 15 %, et la somme des oxydes alcalins Na₂O + K₂O + Li₂O étant en outre comprise entre 7 et 20 %.

2. Article vitrocéramique selon la revendication 1, **caractérisé en ce que** ladite fritte de verre comprend plus de 4 % d'Al₂O₃, en particulier plus de 5% d'Al₂O₃, voire au moins 7% d'Al₂O₃.

3. Article vitrocéramique selon l'une des revendications 1 ou 2, **caractérisé en ce que** la fritte de verre comprend plus de 7% de Na₂O, de préférence au moins 8% de Na₂O, et/ou comprend moins de 13% de BaO, de préférence au plus 12% de BaO.

4. Article vitrocéramique selon l'une des revendications 1 à 3, **caractérisé en ce que** la fritte de verre comprend au plus 2% de Li₂O, voire est dénuée de Li₂O.

5. Article vitrocéramique selon l'une des revendications 1 à 4, **caractérisé en ce que** l'article est formé d'une vitrocéramique comprenant moins de 0.2%, de préférence moins de 0.1%, en poids d'oxydes d'arsenic, en particulier un taux d'oxydes d'arsenic inférieur ou égal à 0.05% en poids, voire nul.

6. Article vitrocéramique selon l'une des revendications 1 à 5, **caractérisé en ce que** l'article est revêtu de ladite couche d'émail en au moins une partie de sa face supérieure.

7. Composition d'émail pour article vitrocéramique, formée d'une fritte de verre de composition suivante, les proportions étant exprimées en pourcentages pondéraux :
| | |
|---|---|
| SiO₂ | 50 - 66% et de préférence 50 < SiO₂ ≤ 65% |
| MgO | 3 - 8% et de préférence 3 - 6% |
| Na₂O | 7 - 15% |
| K₂O | ≤ 3% |
| Li₂O | ≤ 3%, notamment ≤ 2% |
| CaO | ≤ 1% |
| BaO | > 0 - 15% et de préférence 5 - 15% |
| Al₂O₃ | > 3 - 20% et de préférence 3 < Al₂O₃ <20% |
| ZrO₂ | 0 - 4%, de préférence 0 < ZrO₂ < 4%, notamment 0.5 - 2%. |
| ZnO | > 0- 5% |
| B₂O₃ | > 0 - 6 % et de préférence 0 < B₂O₃ ≤ 5% |
la somme des oxydes alcalinoterreux CaO + BaO étant en outre comprise entre 8 et 15 %, et la somme des oxydes alcalins Na₂O + K₂O + Li₂O étant en outre comprise entre 7 et 20 %.

8. Composition d'émail selon la revendication 7, **caractérisée en ce que** la fritte de verre comprend plus de 4% d'Al₂O₃ en particulier plus de 5% d'Al₂O₃, voire au moins 7% d'Al₂O₃, et/ou comprend plus de 7% de Na₂O, de préférence au moins 8% de Na₂O, et/ou comprend moins de 13% de BaO, de préférence au plus 12% de BaO, et/ou comprend au plus 2% de Li₂O, voire est dénuée de Li₂O.

9. Composition d'émail selon l'une des revendications 7 ou 8, **caractérisée en ce que** l'émail/la fritte de verre présente un coefficient de dilatation d'au moins 60.10⁻⁷ K⁻¹, de préférence d'au moins 75.10⁻⁷ K⁻¹.

10. Composition d'émail selon l'une des revendications 7 à 9, **caractérisée en ce que** la fritte et/ou le(s) pigment(s) présente(nt) un D90 inférieur à 20 µm, avantageusement inférieur à 15 µm, en particulier inférieur à 10 µm, notamment inférieur à 5 µm.

11. Procédé de fabrication d'un article vitrocéramique, en particulier selon l'une des revendications 1 à 6, dans lequel on applique la composition selon l'une des revendications 7 à 10 sur l'article de verre précurseur avant céramisation, ladite composition étant cuite pendant le cycle de céramisation et/ou dans lequel on applique ladite composition sur l'article vitrocéramique après céramisation, puis on cuit ladite composition.

12. Procédé selon la revendication 11, **caractérisé en ce que** la cuisson de l'émail est effectuée après céramisation, de préférence à une température située dans la zone de cristallisation, de préférence proche du pic de cristallisation, et/ou à une température supérieure d'environ 250°C à 300°C par rapport à la température de ramollissement dilatométrique de l'émail.

13. Procédé selon l'une des revendications 11 ou 12, **caractérisé en ce que** la fritte et/ou le(s) pigment(s) sont broyés et/ou traités de façon à obtenir un diamètre moyen D90 inférieur à 20 µm, avantageusement inférieur à 15 µm, en particulier inférieur à 10 µm, notamment inférieur à 5 µm, avant application et cuisson de la composition.

14. Dispositif de cuisson et/ou de maintien à haute température comportant une plaque vitrocéramique selon l'une des revendications 1 à 6 et un ou plusieurs éléments de chauffage.

## Patentansprüche

1. Glaskeramischer Artikel, insbesondere Glaskeramikplatte, die beispielsweise dazu bestimmt ist, mindestens ein Kochelement abzudecken oder aufzunehmen, wobei der Artikel mindestens teilweise mit mindestens einer Schicht aus einer Glasur überzogen ist, die aus einer Glasfritte mit folgender Zusammensetzung gebildet ist, wobei die Verhältnisse in Gewichtsprozent angegeben sind:
| | |
|---|---|
| SiO₂ | 50 - 66 % und bevorzugt 50 < SiO₂ ≤ 65 % |
| MgO | 3 - 8 % und bevorzugt 3 - 6 % |
| Na₂O | 7 - 15% |
| K₂O | ≤ 3 % |
| Li₂O | ≤ 3 %, insbesondere ≤ 2 % |
| CaO | ≤ 1 % |
| BaO | > 0 - 15 % und bevorzugt 5 - 15 % |
| Al₂O₃ | > 3 - 20 % und bevorzugt 3 < Al₂O₃<20 % |
| ZrO₂ | 0 - 4 %, bevorzugt 0 < ZrO₂<4 %, insbesondere 0,5 - 2 % |
| ZnO | > 0 - 5 % |
| B₂O₃ | > 0 - 6 % und bevorzugt 0 < B₂O₃≤ 5 % |
wobei die Summe der Erdalkalioxide CaO + BaO ferner zwischen 8 und 15 % beträgt und die Summe der Alkalioxide Na₂O + K₂O + Li₂O ferner zwischen 7 und 20 % beträgt.

2. Glaskeramischer Artikel nach Anspruch 1, **dadurch gekennzeichnet, dass** die Glasfritte mehr als 4 % Al₂O₃, insbesondere mehr als 5 % Al₂O₃ und sogar mindestens 7 % Al₂O₃ enthält.

3. Glaskeramischer Artikel nach einem der Ansprüche 1 oder 2, **dadurch gekennzeichnet, dass** die Glasfritte mehr als 7 % Na₂O, bevorzugt mindestens 8 % Na₂O enthält und/oder weniger als 13 % BaO, bevorzugt höchstens 12 % BaO enthält.

4. Glaskeramischer Artikel nach einem der Ansprüche 1 bis 3, **dadurch gekennzeichnet, dass** die Glasfritte höchstens 2 % Li₂O oder sogar kein Li₂O enthält.

5. Glaskeramischer Artikel nach einem der Ansprüche 1 bis 4, **dadurch gekennzeichnet, dass** der Artikel aus einer Glaskeramik gebildet ist, die weniger als 0,2 Gew.-%, bevorzugt weniger als 0,1 Gew.-% Arsenoxide enthält, insbesondere einen Arsenoxidanteil von kleiner oder gleich 0,05 Gew.-% oder sogar null.

6. Glaskeramischer Artikel nach einem der Ansprüche 1 bis 5, **dadurch gekennzeichnet, dass** der Artikel an mindestens einem Teil seiner Oberseite mit der Glasurschicht überzogen ist.

7. Glasurzusammensetzung für einen Glaskeramikartikel, die aus einer Glasfritte mit folgender Zusammensetzung gebildet ist, wobei die Verhältnisse in Gewichtsprozent angegeben sind:
| | |
|---|---|
| SiO₂ | 50 - 66 % und bevorzugt 50 < SiO₂ ≤ 65 % |
| MgO | 3 - 8 % und bevorzugt 3 - 6 % |
| Na₂O | 7 - 15% |
| K₂O | ≤ 3 % |
| Li₂O | ≤ 3 %, insbesondere ≤ 2 % |
| CaO | ≤ 1 % |
| BaO | > 0 - 15 % und bevorzugt 5 - 15 % |
| Al₂O₃ | > 3 - 20 % und bevorzugt 3 < Al₂O₃ <20 % |
| ZrO₂ | 0 - 4 %, bevorzugt 0 < ZrO₂ <4 %, insbesondere 0,5 - 2 % |
| ZnO | > 0 - 5 % |
| B₂O₃ | > 0 - 6 % und bevorzugt 0 < B₂O₃≤ 5 % |
wobei die Summe der Erdalkalioxide CaO + BaO ferner zwischen 8 und 15 % beträgt und die Summe der Alkalioxide Na₂O + K₂O + Li₂O ferner zwischen 7 und 20 % beträgt.

8. Glasurzusammensetzung nach Anspruch 7, **dadurch gekennzeichnet, dass** die Glasfritte mehr als 4 % Al₂O₃, insbesondere mehr als 5 % Al₂O₃ oder sogar mindestens 7 % Al₂O₃ enthält und/oder mehr als 7 % Na₂O, bevorzugt mindestens 8 % Na₂O enthält und/oder weniger als 13 % BaO, bevorzugt höchstens 12 % BaO enthält und/oder höchstens 2 % Li₂O oder sogar kein Li₂O enthält.

9. Glasurzusammensetzung nach einem der Ansprüche 7 oder 8, **dadurch gekennzeichnet, dass** die Glasur/die Glasfritte einen Ausdehnungskoeffizienten von mindestens 60.10⁻¹ K⁻¹, bevorzugt mindestens 75.10⁻¹ K⁻¹ aufweist.

10. Glasurzusammensetzung nach einem der Ansprüche 7 bis 9, **dadurch gekennzeichnet, dass** die Fritte und/oder das(die) Pigment(e) einen D90 kleiner als 20 µm, vorteilhafterweise kleiner als 15 µm, insbesondere kleiner als 10 µm, vor allem kleiner als 5 µm aufweist (aufweisen).

11. Verfahren zur Herstellung eines Glaskeramikartikels, insbesondere nach einem der Ansprüche 1 bis 6, bei dem die Zusammensetzung nach einem der Ansprüche 7 bis 10 auf den Vorläuferglasartikel vor der Keramisierung aufgebracht wird, wobei die Zusammensetzung während des Keramisierungszyklus gebrannt wird, und/oder bei dem die Zusammensetzung auf den Glaskeramikartikel nach der Keramisierung aufgebracht wird und die Zusammensetzung anschließend gebrannt wird.

12. Verfahren nach Anspruch 11, **dadurch gekennzeichnet, dass** das Brennen der Glasur nach der Keramisierung durchgeführt wird, bevorzugt bei einer Temperatur, die im Kristallisationsbereich liegt, bevorzugt nahe der Kristallisationsspitze, und/oder bei einer Temperatur, die um etwa 250 °C bis 300 °C über der dilatometrischen Erweichungstemperatur der Glasur liegt.

13. Verfahren nach einem der Ansprüche 11 oder 12, **dadurch gekennzeichnet, dass** die Fritte und/oder das (die) Pigment(e) gemahlen werden und/oder so behandelt werden, dass ein mittlerer Durchmesser D90 kleiner als 20 µm, vorteilhafterweise kleiner als 15 µm, insbesondere kleiner als 10 µm, vor allem kleiner als 5 µm vor dem Aufbringen und Brennen der Zusammensetzung erhalten wird.

14. Koch- und/oder Warmhaltevorrichtung mit einer Glaskeramikplatte nach einem der Ansprüche 1 bis 6 und einem oder mehreren Kochelementen.

## Claims

1. A glass-ceramic article, in particular a glass-ceramic plate intended, for example, for covering or accommodating at least one heating element, said article being at least partly coated with at least one layer of an enamel formed from a glass frit having the following composition, the proportions being expressed as weight percentages:
| | |
|---|---|
| SiO₂ | 50 - 66% and preferably 50 < SiO₂ ≤ 65% |
| MgO | 3 - 8% and preferably 3 - 6% |
| Na₂O | 7 - 15% |
| K₂O | ≤ 3% |
| Li₂O | ≤ 3%, in particular ≤ 2% |
| CaO | ≤ 1% |
| BaO | > 0 - 15% and preferably 5 - 15% |
| Al₂O₃ | >3 - 20% and preferably 3 < Al₂O₃ < 20% |
| ZrO₂ | 0 - 4%, preferably 0 < ZrO₂ < 4%, in particular 0.5 - 2% |
| ZnO | > 0 - 5% |
| B₂O₃ | > 0 - 6% and preferably 0 < B₂O₃ ≤ 5% |
the sum of the alkaline-earth metal oxides CaO + BaO moreover being between 8 and 15%, and the sum of the alkali metal oxides Na₂O + K₂O + Li₂O moreover being between 7 and 20%.

2. The glass-ceramic article as claimed in claim 1, **characterized in that** said glass frit comprises more than 4% of alumina Al₂O₃, in particular more than 5% of Al₂O₃, or even at least 7% of Al₂O₃.

3. The glass-ceramic article as claimed in either of claims 1 and 2, **characterized in that** the glass frit comprises more than 7% of Na₂O, preferably at least 8% of Na₂O, and/or comprises less than 13% of BaO, preferably at most 12% of BaO.

4. The glass-ceramic article as claimed in one of claims 1 to 3, **characterized in that** the glass frit comprises at most 2% of Li₂O, or even is devoid of Li₂O.

5. The glass-ceramic article as claimed in one of claims 1 to 4, **characterized in that** the article is formed from a glass-ceramic comprising less than 0.2% by weight, preferably less than 0.1% by weight, of arsenic oxides, in particular a content of arsenic oxides of less than or equal to 0.05% by weight, or even zero.

6. The glass-ceramic article as claimed in one of claims 1 to 5, **characterized in that** the article is coated with said layer of enamel on at least one part of its upper face.

7. An enamel composition for a glass-ceramic article, formed from a glass frit having the following composition, the proportions being expressed as weight percentages:
| | |
|---|---|
| SiO₂ | 50 - 66% and preferably 50 < SiO₂ ≤ 65% |
| MgO | 3 - 8% and preferably 3 - 6% |
| Na₂O | 7 - 15% |
| K₂O | ≤ 3% |
| Li₂O | ≤ 3%, in particular ≤ 2% |
| CaO | ≤ 1% |
| BaO | > 0 - 15% and preferably 5 - 15% |
| Al₂O₃ | >3 - 20% and preferably 3 < Al₂O₃ < 20% |
| ZrO₂ | 0 - 4%, preferably 0 < ZrO₂ < 4%, in particular 0.5 - 2% |
| ZnO | > 0 - 5% |
| B₂O₃ | > 0 - 6% and preferably 0 < B₂O₃ ≤ 5% |
the sum of the alkaline-earth metal oxides CaO + BaO moreover being between 8 and 15%, and the sum of the alkali metal oxides Na₂O + K₂O + Li₂O moreover being between 7 and 20%.

8. The enamel composition as claimed in claim 7, **characterized in that** the glass frit comprises more than 4% of Al₂O₃, in particular more than 5% of Al₂O₃, or even at least 7% of Al₂O₃, and/or comprises more than 7% of Na₂O, preferably at least 8% of Na₂O, and/or comprises less than 13% of BaO, preferably at most 12% of BaO, and/or comprises at most 2% of Li₂O, or even is devoid of Li₂O.

9. The enamel composition as claimed in either of claims 7 and 8, **characterized in that** the enamel/glass frit has an expansion coefficient of at least 60×10⁻⁷ K⁻¹, preferably of at least 75 × 10⁻⁷ K⁻¹.

10. The enamel composition as claimed in one of claims 7 to 9, **characterized in that** the frit and/or the pigment(s) has or have a D90 less than 20 µm, advantageously less than 15 µm, in particular less than 10 µm, notably less than 5 µm.

11. A process for manufacturing a glass-ceramic article, in particular as claimed in one of claims 1 to 6, in which the composition as claimed in one of claims 7 to 10 is applied to the precursor glass article before ceramization, said composition being baked during the ceramization cycle and/or in which said composition is applied to the glass-ceramic article after ceramization, then said composition is baked.

12. The process as claimed in claim 11, **characterized in that** the enamel is baked after ceramization, preferably at a temperature located in the crystallization zone, preferably close to the crystallization peak, and/or at a temperature of around 250°C to 300°C higher with respect to the dilatometric softening temperature of the enamel.

13. The process as claimed in either of claims 11 and 12, **characterized in that** the frit and/or the pigment(s) is or are milled and/or treated so as to obtain an average diameter D90 less than 20 µm, advantageously less than 15 µm, in particular less than 10 µm, notably less than 5 µm, before application and baking of the composition.

14. A device for baking or for maintaining at high temperature, comprising a glass-ceramic plate as claimed in one of claims 1 to 6 and one or more heating elements.
